# EUROPEAN PATENT SPECIFICATION

(11) **EP 1 096 481 B1**
(45) Date of publication and mention of the grant of the patent: **14.11.2007**
(21) Application number: 00309380.4
(22) Date of filing: 25.10.2000
(51) Int. Cl.: G11B 7/09, G11B 7/005, G11B 7/13

(54) **Tracking error signal detecting apparatus and reproduction signal detecting apparatus**
Gerät zur Feststellung des Spurfolgefehlersignals und Wiedergabegerät
Appareil de détection d'erreur de suivi de piste et appareil de reproduction

(30) Priority: 30.10.1999 KR 9947750
(43) Date of publication of application: 02.05.2001
(73) Proprietor: SAMSUNG ELECTRONICS CO., LTD., Suwon-City, Kyungki-do (KR)
(72) Inventor: Ma, Byung-in, 202-1302 Samsung Apt., Suwon-city, Kyungki-do (KR); Park, In-sik, 615-801 Shinnamushil Kukdong Apt., Suwon-city, Kyugki-do (KR); Seo, Joong-eon, Uiwang-city, Kyungki-do (KR); Chung, Chong-sam, 718-1904 Salgugol Donga Apt., Suwon-city, Kyungki-do (KR)
(74) Representative: Robinson, Ian Michael

(56) References cited:
- US-A- 5 136 567
- US-A- 5 671 200
- PATENT ABSTRACTS OF JAPAN vol. 1998, no. 09, 31 July 1998 (1998-07-31) -& JP 10 097753 A (MATSUSHITA ELECTRIC IND CO LTD), 14 April 1998 (1998-04-14)
- PATENT ABSTRACTS OF JAPAN vol. 017, no. 491 (P-1607), 6 September 1993 (1993-09-06) -& JP 05 120726 A (NEC CORP), 18 May 1993 (1993-05-18)

## Description

The present invention relates to a tracking error signal detecting apparatus and a reproduction signal detecting apparatus, and more particularly, to a tracking error signal detecting apparatus for improving the precision in detecting a tracking error signal and a reproduction signal detecting apparatus for detecting a reproduction signal with crosstalk noise greatly reduced.

Conventional methods for detecting tracking errors by receiving light radiated from a light source of an optical pickup device and reflected from a disk include a method for detecting a tracking error signal (TES) by differential phase detection (DPD).

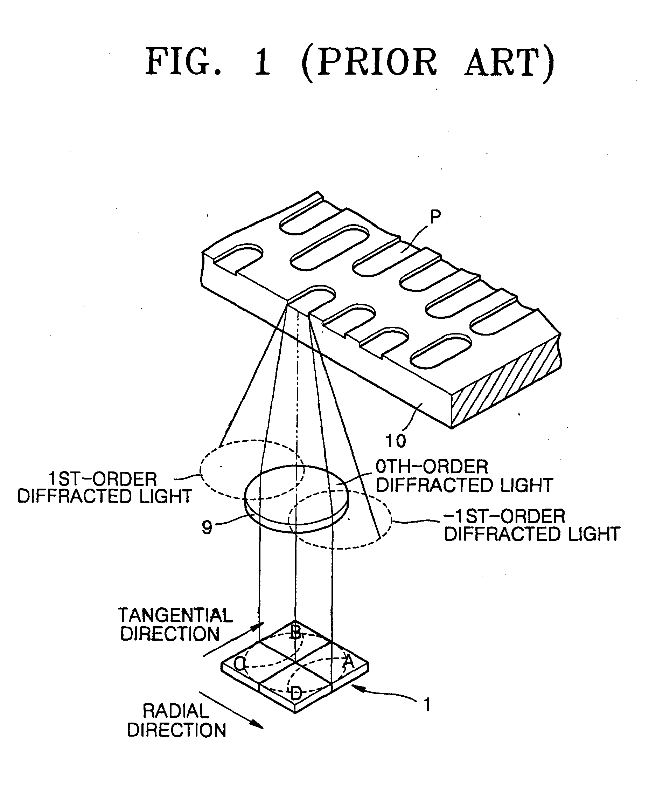

Referring to Figure 1, light radiated onto a ROM-type disk is reflected and is diffracted into 0th-order maximum and ±1st-order maxima by recording marks such as pits (P). After traveling back through the optical pickup, the light received at a photodetector 1 substantially consists of the 0th-order maximum overlapped by ±1st-order maxima in a radial direction. Here, in the case of a high-density disk having narrow tracks, such as a next-generation digital versatile disk (DVD), which is called a HD-DVD, the 0th-order maximum and ±1st-order maxima overlap, while +lst-order maximum and -1st-order maximum do not overlap each other.

Phase signals of portions where the 0th-order maximum and the +lst-order maximum overlap and where the 0th-order maximum and the -1st-order maximum overlap have different features from a phase signal of the 0th-order maximum only. Thus, in the case of the high-density disk having narrow tracks, if a tracking error signal is detected by a general DPD method,in which detection signals of diagonal sectional plates A/C and B/D are simply subtracted, great noise is caused in the tracking error signal due to crosstalk between adjacent tracks.

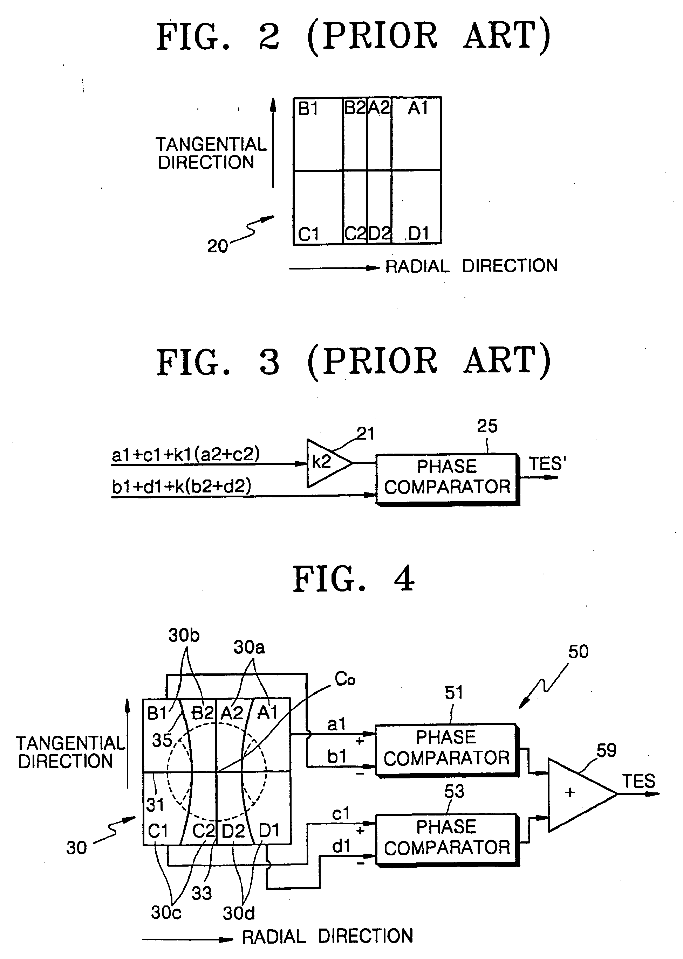

In order to detect a tracking error signal with reduced crosstalk noise from adjacent tracks, there has been proposed a method in which an 8-sectional photodetector 20 is employed, as shown in Figure 2.

The 8-sectional photodetector 20 is divided into 4 parts in a row direction corresponding to the radial direction of a disk and is divided into 2 parts in a column direction corresponding to the tangential direction of a disk, so that its sections are arranged in a 2 × 4 matrix. Here, the respective 2-sectional plates A1/A2, B1/B2, C1/C2 and D1/D2 correspond to the sectional plates A, B, C and D of the photodetector 20 shown in Figure 1. The sectional plates A2, B2, C2 and D2 are positioned at the inner sides of A1, B1, C1 and D1, respectively.

The tracking error signal is produced from detection signals of the 8-sectional photodetector 20 as follows.

Referring to Figure 3, a sum signal (a1+c1) of detection signals a1 and c1 of outer sectional plates A1 and C1 arranged in a diagonal direction and a signal obtained by amplifying a sum signal (a2+c2) of detection signals a2 and c2 of inner sectional plates A2 and C2 with a predetermined gain k1 are summed, and the sum signal [a1+c1+k1(a2+c2)] is input to an amplifier 21 to then be amplified with a predetermined gain k2. Likewise, a sum signal (b1+d1) of detection signals b1 and d1 of outer sectional plates B1 and D1 arranged in another diagonal direction and a signal obtained by amplifying a sum signal (b2+d2) of detection signals b2 and d2 of inner sectional plates B2 and D2 with a predetermined gain k are summed. Then, the signal [k2(a1+c1+k1(a2+c2))] output from the amplifier 21 and the operation signal [b1+d1+k(b2+d2)] output from the diagonal sectional plates B1, B2, D1 and D2 are applied to a phase comparator 25 for comparison of phases, to then generate a tracking error signal TES'.

Here, if k=k1=0 and k2=1, the signals applied to the phase comparator 25 are a1+c1 and b1+d1, which corresponds to the case where a phase difference is obtained using a sum signal of detection signals of outer sectional plates arranged in a diagonal direction.

Also, if k≠0 and k1≠0, the signals applied to the phase comparator 25 are a2+c2 and b2+d2, which corresponds to the case where a phase difference is obtained using a sum signal of detection signals of inner sectional plates arranged in a diagonal direction.

According to the aforementioned tracking error signal detecting apparatus, since a phase difference is obtained by selectively amplifying detection signals of inner sectional plates A2, B2, C2 and D2 with a predetermined gain factors and then adding the amplified signals and detection signals of outer sectional plates A1, B1, C1 and D1, a tracking error signal with reduced crosstalk noise can be generated.

Although the conventional tracking error signal detecting apparatus reduces crosstalk noise to a degree, when it is employed with a high-density disk having narrow tracks, in which tangential phase characteristics are obscured, the gain of tracking error signals is very low, that is, the precision is poor.

The beams received at sectional plates positioned at different locations in a tangential direction of a track have different phase characteristics at a starting area and an ending area of a recording mark such as a pit. However, if detection signals of diagonally adjacent plates are summed like in the conventional tracking error signal detecting apparatus, tangential phase characteristics are offset, which results in tracking error signals having a low gain, that is, poor precision.

Also, in the conventional tracking error signal detecting apparatus, since sum signals of detection signals of diagonally adjacent sectional plates are used, a phase difference between the sum signals is offset due to a difference in the depth between pits. Thus, if an objective lens (not shown) is shifted, a large offset may occur to the tracking error signals.

US-B-5 136 567 discloses a photo-detecting device which is divided into sections along lines passing through the centre of the surface which run parallel to the direction of tracking and which also run at an angle of 45 degrees to the first two lines. The precharacterising portions of the appended claims are based on this document.

The present invention has been made in view of the points described above, and it is an aim of embodiments of the present invention to provide a tracking error signal detecting apparatus with improvement in gain characteristics and/or offset due to a difference in the depth between pits by providing an improved sectioning structure of an 8-sectional photodetector, and a reproduction signal detecting apparatus with reduced crosstalk noise.

According to the present invention there is provided an apparatus as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a perspective view illustrating light reflected/diffracted from a general recording medium;
Figures 2 and 3 illustrate a tracking error signal detecting apparatus employing a conventional 3-sectional photodetector;
Figure 4 is a diagram schematically illustrating a tracking error signal detecting apparatus according to an embodiment of the present invention;
Figure 5 through 8 are plan views schematically illustrating another example of a photodetector shown in Figure 4;
Figure 9 is a graph showing tracking error signals output from the tracking error signal detecting apparatus shown in Figure 4;
Figure 10 is a graph showing tracking error signals output from the conventional tracking error signal detecting apparatus;
Figures 11 through 13 are block diagrams illustrating another example of a circuit unit shown in Figure 4;
Figure 14 is a diagram schematically illustrating a tracking error signal detecting apparatus according to another embodiment of the present invention;
Figures 15 through 17 are block diagrams illustrating another example of a circuit unit shown in Figure 14.

Referring to Figure 4, a tracking error signal detecting apparatus according to an embodiment of the present invention includes a photodetector 30 for receiving the light reflected/diffracted from a recording medium such as a disk (10 of Figure 1), and a circuit unit 50 for performing operations with respect to detection signals of the photodetector 30 to produce a tracking error signal TES. Here, the photodetector 30 receives incident light which is reflected from the recording medium, and the detection signals thereof are used in detecting the tracking error signal TES and detecting a reproduction signal of the recording medium to be described later.

The photodetector 30 includes four light receiving regions 30a (A1/A2), 30b (B1/B2), 30c (C1/C2) and 30d (D1/D2) arrayed counterclockwise in a 2x2 matrix, the light receiving regions being produced such that the photodetector 30 is bisected in a direction corresponding to the tangential direction of the recording medium and further bisected in a direction corresponding to the radial direction of the recording medium, where the tangential direction refers to a direction of information sequences recorded on the recording medium and the radial direction refers to a direction perpendicular to the information sequences. The respective light receiving regions 30a, 30b, 30c and 30d are bisected to have inner sectional plates A2, B2, C2 and D2, the radial widths of which vary along the ± tangential directions from the center C₀ of the photodetector 30.

Thus, the photodetector 30 is arrayed in 2x4 matrix and consists of 8 sectional plates A1, A2, B1, B2, C1, C2, D1 and D2 for independently performing photoelectric conversion. The outer sectional plates A1, B1, C1 and D1 and the inner sectional plates A2, B2, C2 and D2 are arranged counterclockwise.

As shown in Figure 2, the light reflected/diffracted from a ROM-type high-density recording medium having relatively narrow tracks is diffracted into 0th-order diffracted light and ±1st-order diffracted light along the radial direction. When the 0th-order diffracted light and the ±1st-order diffracted light overlap and +lst-order diffracted light and -1st-order diffracted light do not overlap, the outer sectional plates A1, B1, C1 and D1 receive light mainly from the overlapping area of the 0th-order diffracted light and the +lst-order diffracted light and from the overlapping area of the 0th-order diffracted light and the -1st-order diffracted light, and the inner sectional plates A2, B2, C2 and D2 receive light only from the area of the 0th-order diffracted light.

In other words, the inner sectional plates A2, B2, C2 and D2 are preferably formed such that the widths thereof are relatively narrow at the center C₀ of the photodetector 30 and become wider along the ± tangential directions.

However, in the case of employing a low-density recording medium having a relatively large track pitch or RAM-type high-density recording medium having a land/groove configuration, in which some of ±1st-order diffracted light reflected/diffracted from the recording medium simultaneously overlap with 0th-order diffracted light, the respective light receiving regions 30a, 30b, 30c and 30d are preferably bisected to have inner sectional plates A2, B2, C2 and D2, the widths of which are relatively wide at the center C₀ of the photodetector 30 and become narrower along the ± tangential directions. Here, the inner sectional plates A2, B2, C2 and D2 receive the light from an area where the 0th-order diffracted light and the ±1st-order diffracted light overlap simultaneously.

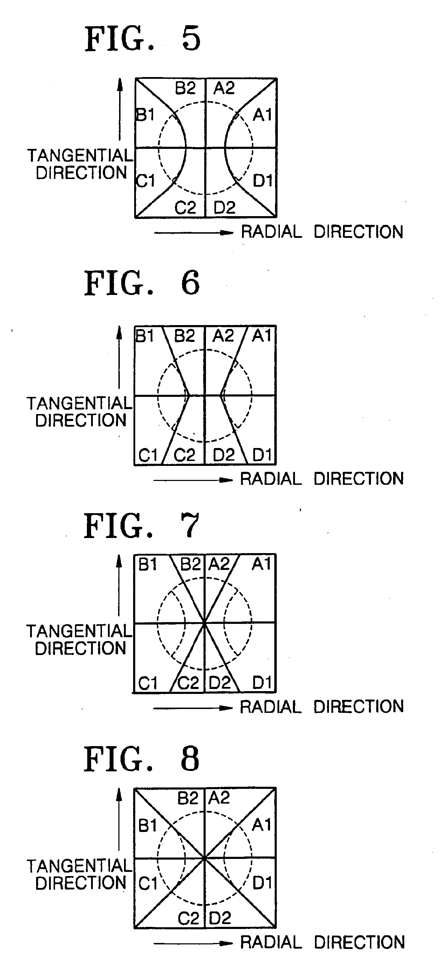

The sectioning structure of the 8-sectional photodetector 30 according to the present invention will now be described through detailed embodiments. As shown in Figures 4 and 5, a dividing line 35 of each of the respective light receiving regions 30a, 30b, 30c and 30d is preferably a curved line having a predetermined curvature so as to separately receive light from an area of the 0th-order diffracted light and an overlapping area of the 0th-order diffracted light and the ±1st-order diffracted light.

Here, the dividing line 35 is tangent to the overlapping area of the 0th-order diffracted light and the ±1st-order diffracted light at the intersection with a row-directional dividing line 31.

Figure 4 illustrates that the dividing line 35 is substantially a part of an ellipse, and Figure 5 illustrates that the dividing line 35 is a part of a parabola formed such that the maximum width of each of the inner sectional plates A2, B2, C2 and D2 is greater than the radius of the 0th-order diffracted light received thereat. The dividing line 35 shown in Figure 5 more closely fits the boundary of the overlapping area of the 0th-order diffracted light and the ±1st-order diffracted light and thus has an advantage in that it can minimize the amount of 0th-order diffracted light received at the outer sectional plates A1, B1, C1 and D1.

Alternatively, the respective light receiving regions 30a, 30b, 30c and 30d may be bisected such that the width of each of the inner sectional plates A2, B2, C2 and D2 linearly increases from the center C₀ of the photodetector 30 outward in the ± tangential directions.

For example, the respective light receiving regions 30a, 30b, 30c and 30d may be bisected such that each of the inner sectional plates A2, B2, C2 and D2 has the shape of a trapezoid, a right triangle or an isosceles triangle, as viewed at positions spaced a predetermined distance apart from the center C₀ of the photodetector 30 outward in the ± tangential directions, as shown in Figures 6 through 8.

The tracking error signal detecting apparatus according to an embodiment of the present invention employs the 8-sectional photodetector 30 having various sectioning configurations as described above, and the photodetector 30 having the sectioning configuration shown in Figure 4 will be described below by way of example.

Referring back to Figure 4, the circuit unit 50 compares the phases of detection signals of inner and/or outer sectional plates positioned in the same row with each other and detects a tracking error signal from phase difference signals.

For example, as shown in Figure 4, the circuit unit 50 includes a pair of phase comparators 51 and 53 for comparing phases of input signals, and an adder 59 for adding phase difference signals output from the phase comparators 51 and 53.

Detection signals a1 and b1 of the outer sectional plates A1 and B1 positioned in the first row are input to the phase comparator 51 for phase comparison. Detection signals c1 and d1 of the outer sectional plates C1 and D1 positioned in the second row are input to the phase comparator 53 for phase comparison.

Thus, a tracking error signal TES output from the adder 59 is obtained by adding a phase difference signal between the detection signals a1 and b1 of the outer sectional plates A1 and B1 and a phase difference signal between the detection signals c1 and d1 of the outer sectional plates C1 and D1 positioned in the same row, that is, in the same row in the tangential direction, the phase difference signals being applied from the phase comaprators 51 and 53, respectively.

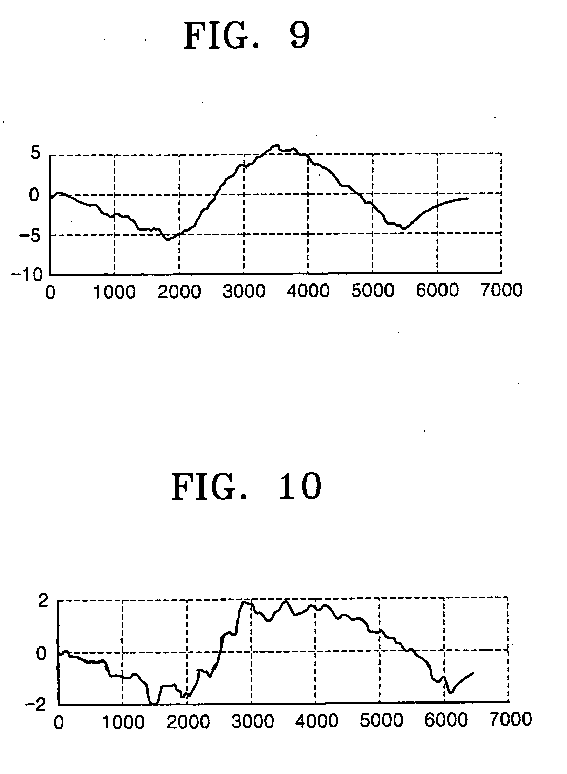

Figure 9 is a graph showing a tracking error signal TES detected from the circuit unit 50 of the tracking error signal detecting apparatus according to an embodiment of the present invention, shown in Figure 4, and Figure 10 is a graph showing a tracking error signal TES' generated by the conventional tracking error signal detecting apparatus shown in Figures 2 and 3. Here, the abscissa indicates a light spot moving across tracks of a recording medium in a radial direction, and the ordinate indicates a change in the tracking error signal depending on the movement of,a light spot.

Comparing Figures 9 and 10, the tracking error signal TES detected by the tracking error signal detecting apparatus according to the present invention has a large gain and noticeably improved noise characteristics, compared to the tracking error signal TES' generated by obtaining the diagonal sum signals a1+c1 and b1+d1 of the detection signals a1, b1, c1 and d1 of the outer sectional plates A1, B1, C1 and D1 of the conventional photodetector (20 of Figure 2) and then comparing the phases thereof.

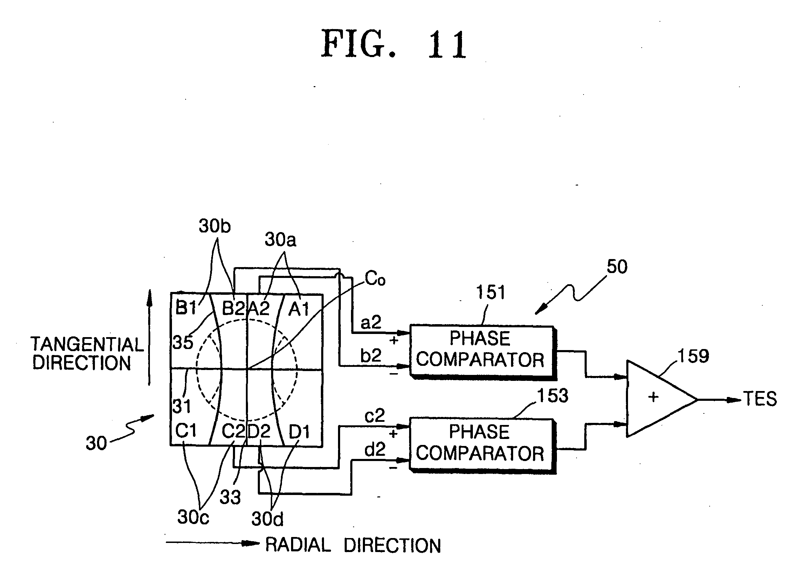

In another embodiment of the circuit unit 50, as shown in Figure 11, the tracking error signal may be generated using the detection signals a2, b2, c2 and d2 of the inner sectional plates A2, B2, C2 and D2, instead of the detection signals a1, b1, c1 and d1 of the outer sectional plates A1, B1, C1 and D1.

In other words, detection signals a2 and b2 of the inner sectional plates A2 and B2 positioned in the first row are applied to a phase comparator 151 and a phase difference signal is output therefrom. Also, detection signals c2 and d2 of the inner sectional plates C2 and D2 positioned in the second row are applied to another phase comparator 153 and a phase difference signal is output therefrom. An adder 159 adds the phase difference signals and outputs a tracking error signal.

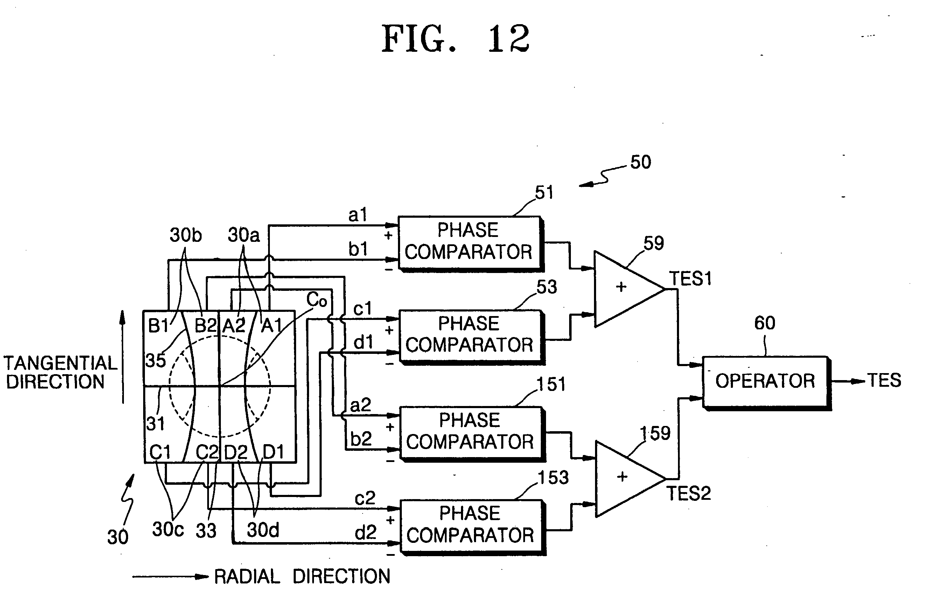

In a still another embodiment, the circuit unit 50, as shown in Figure 12, has a combined structure of the configurations shown in Figures 4 and 11, to detect a tracking error signal using detection signals a1, a2, b1, b2, c1, c2, d1 and d2 of all inner and outer sectional plates A1, A2, B1, B2, C1, C2, D1 and D2.

In other words, a tracking error signal TES1 (see Figure 9) obtained by an operation of the detection signals a1, b1, c1 and d1 of the outer sectional plates A1, B1, C1 and D1, and a tracking error signal TES2 obtained by an operation of the detection signals a2, b2, c2 and d2 of the inner sectional plates A2, B2, C2 and D2, are summed by an operator 60 to produce a tracking error signal TES. Here, the TES2 is a tracking error signal obtained by operation of the detection signals a2, b2, c2 and d2 of the inner sectional plates A2, B2, C2 and D2, and corresponds to a tracking error signal output from the adder 159 shown in Figure 11.

The operator 60 amplifies one tracking error signal TES2 of the tracking error signals TES1 and TES2 output from the adder 59 and 159 with a predetermined gain k and then sums the other tracking error signal TES1 and the amplified signal k*TES2 to produce a tracking error signal TES [=TES1+(k*TES2)].

Here, the operator 60 may amplify the tracking error signal TES1 with a predetermined gain. Otherwise, the operator 60 amplifies both the tracking error signal TES1 and TES2 with appropriate gains and then sums the amplified signals and produces the tracking error signal TES.

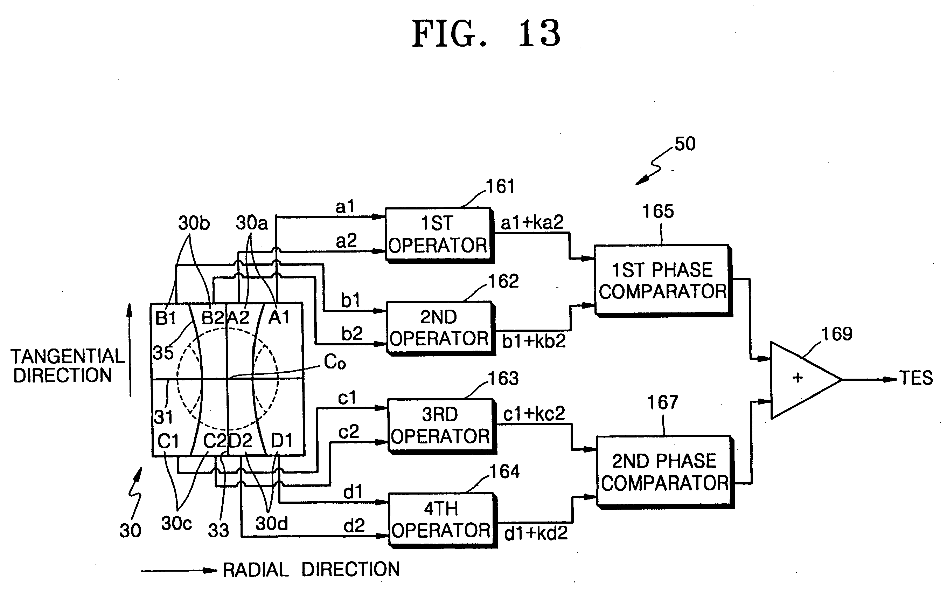

Alternatively, the circuit unit 50, as shown in Figure 13, may include first through fourth operators 161, 162, 163 and 164 , first and second phase comparators 165 and 167 and an adder 169, and may produce a tracking error signal by phase-comparing sum signals a1+ka2, b1+kb2, c1+kc2 and d1+kd2 of signals ka2, kb2, kc2 and kd2 obtained by amplifying detection signals a2, b2, c2 and d2 of the inner sectional plates A2, B2, C2 and D2 with a predetermined gain k, and detection signals a1, b1, c1 and d1 of the corresponding outer sectional plates A1, B1, C1 and D1, and adding phase difference signals.

The detection signals a1 and a2 of the outer and inner sectional plates A1 and A2 forming the light receiving regions A1 and A2 positioned in the first row, are applied to the first operator 161. The first operator 161 amplifies the detection signal a2 of the inner sectional plate A2 with a predetermined gain k and then sums the same with the detection signal a1 of the outer sectional plate A1. Thus, output signal of the first operator 161 becomes a1+ka2.

Likewise, the detection signals b1 and b2, c1 and c2, and d1 and d2 of the other light receiving regions B1 and B2, C1 and C2, and D1 and D2 are applied to the second through fourth operators 162, 163 and 164 to then be operated. The second through fourth operators 162, 163 and 164 output operation signals bl+kb2, c1+kc2 and d1+kd2.

Signals detected from the light receiving regions A1 and A2, and B1 and B2 positioned in the first row and having passed through the first and second operators 161 and 162 are phase-compared by the first phase comparator 165. Likewise, signals detected from the light receiving regions C1 and C2, and D1 and D2 positioned in the second row and having passed through the third and fourth operators 163 and 164 are phase-compared by the second phase comparator 167.

The phase difference signals output from the first and second phase comparators 165 and 167 are summed by the adder 169. Then; the adder 169 outputs the tracking error signal TES.

The circuit unit 50 having the aforementioned configuration sums detections signals of outer and inner sectional plates forming the respective light receiving regions 30a, 30b, 30c and 30d with signals obtained by amplifying the detection signals of the inner sectional plates with a predetermined gain, and phase differences of signals from the sectional plates positioned in the same row are compared. Thus, a difference in the signal characteristic between detection signals of the outer and inner sectional plates can be compensated for, thereby detecting a tracking error signal with a large gain and reduced crosstalk noise.

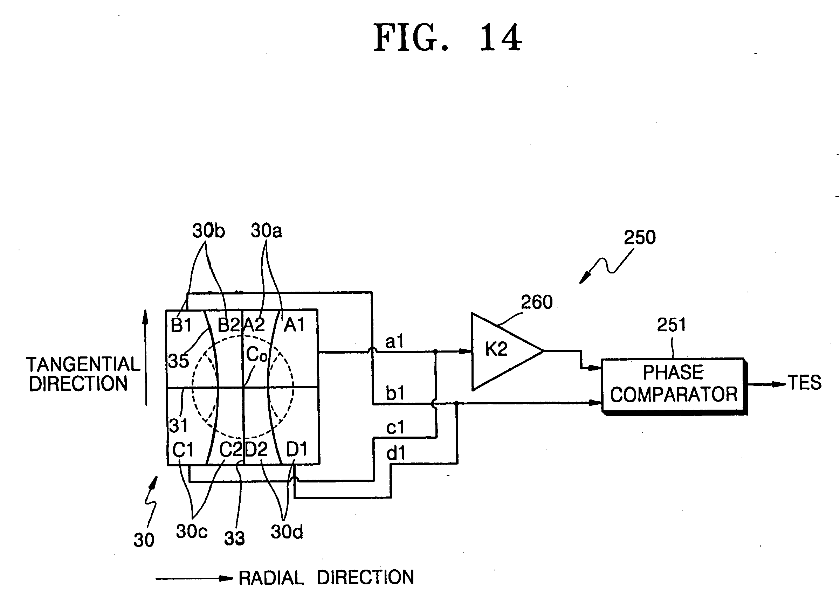

Figure 14 illustrates a tracking error signal detecting apparatus according to another embodiment of the present invention, in which a circuit unit 250 detects a tracking error signal from phase difference signals by amplifying at least some of the detection signals of inner and/or outer sectional plates positioned in one diagonal direction with a predetermined gain and phase-comparing the amplified signals with at least some of the detection signals of inner and/or outer sectional plates positioned in the other diagonal direction.

For example, as shown in Figure 14, the circuit unit 250 includes an amplifier 260 for amplifying a sum signal of the detection signals a1 and c1 of the outer sectional plates A1 and C1 positioned in one diagonal direction, and a phase comparator 251 for comparing phases of a sum signal b1+d1 of the detection signals b1 and d1 of the outer sectional plates B1 and D1 positioned in the other diagonal direction and an output signal k2(a1+c1) of the amplifier 260 to detect a tracking error signal TES. Here, the gain k2 is a constant other than zero.

The aforementioned tracking error signal detecting apparatus sums detection signals of outer sectional plates positioned in a diagonal direction like in the general DPD method. However, the apparatus receives only the light of overlapping areas of the 0th-order maximum and +lst-order maximum and the 0th-order maximum and -1st-order maximum from outer sectional plates, amplifies the sum signal of one diagonal direction with a predetermined gain and then compares the phase of the amplified signal with that of the sum signal of the other diagonal direction. Thus, the tracking error signal TES has a larger gain and less noise than the conventional tracking error signal TES'.

Here, the circuit unit 250 of Figure 14 may be connected to detect a tracking error signal from detection signals of the inner sectional plates A2, B2, C2 and D2.

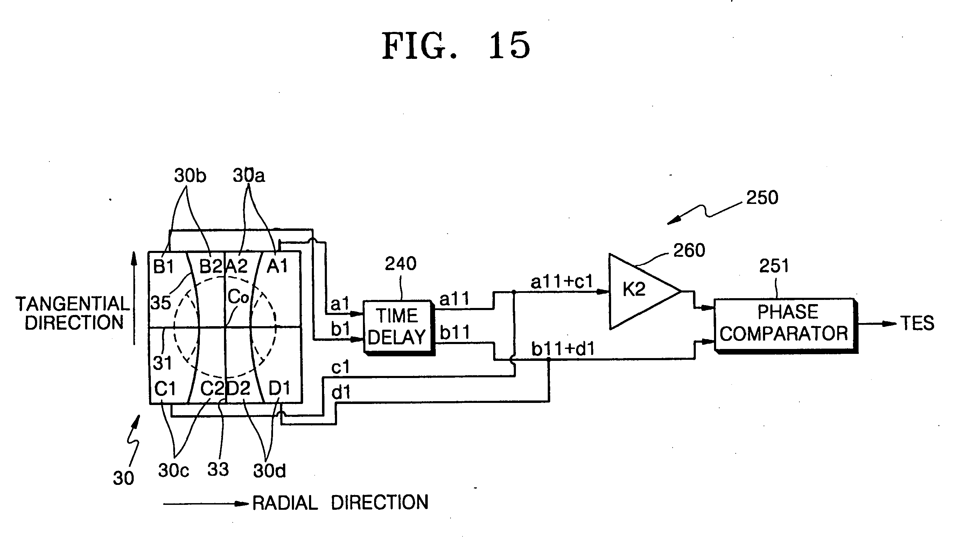

The circuit unit 250 of Figure 14 may further include a time delay 240 at output ends of the outer sectional plates A1 and B1, as shown in Figure 15.

In this case, the detection signals a1 and b1 of the outer sectional plates A1 and B1 pass through the time delay 240 to then be converted into time-delayed signals all and b11, which are summed with the detection signals c1 and d1 of the outer sectional plates C1 and D1 positioned in another row to then be applied to the amplifier 260 and the phase comparator 251, like in Figure 14.

If the detection signals a1 and b1 of the outer sectional plates A1 and B1 positioned in one row are time-delayed to detect a track error signal TES, as shown in Figure 15, it is possible to compensate for a tracking error signal offset generated when an objective lens (not shown) is shifted due to a phase difference offset of diagonal sum signals, caused by a change in the pit depth, occurring to practical recording media, thereby detecting a more accurate tracking error signal.

In other words, if a difference in the pit depth of a recording medium is generated, the conventional tracking error signal detecting apparatus detects a tracking error signal by summing detection signals of two diagonal directions and then subtracting the diagonal sum signals. Thus, signal deterioration is severe. On the other hand, the circuit unit 250 of Figure 15 according to the present invention first performs an operation of detection signals of sectional plates positioned in the same diagonal line, and time-delay and amplification are then performed to produce a tracking error signal. Thus, since phase deterioration due to signal distortion caused by a change in the pit depth is greatly improved, a tracking error signal with greatly reduced offset can be generated.

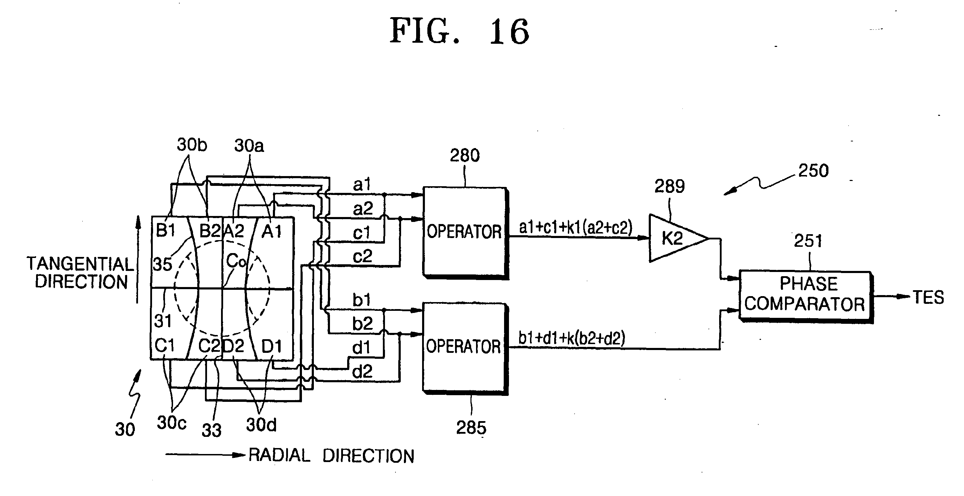

Alternatively, unlike the circuit unit 250 according to another embodiment of the present invention, as shown in Figure 14, in which a tracking error signal is generated using only the detection signals of the inner or outer sectional plates, detection signals of both the inner and outer sectional plates A2, B2, C2 and D2 and A1, B1, C1 and D1 can be used in detecting a tracking error signal, as shown in Figure 16.

In other words, the circuit unit 250 may detect a tracking error signal by appropriately operating detection signals of sectional plates positioned in the respective diagonal directions, and phase-comparing the operation signals. The circuit unit 250 has the following configuration.

Detection signals a1, c1, a2 and c2 of the outer and inner sectional plates A1, C1, A2, C2 positioned in one diagonal direction are applied to a first operator 280. The first operator 280 amplifies a sum signal a2+c2 of detection signals a2 and c2 of the inner sectional plates A2 and C2 with a predetermined gain k1 and adds a sum signal a1+c1 of detection signals a1 and c1 of the outer sectional plates A1 and C1 with the amplified signal k1(a2+c2).

The output signal a1+c1+k1(a2+c2) of the first operator 280 is again amplified by an amplifier 289 with a predetermined gain k2.

Detection signals b1, d1, b2 and d2 of the outer and inner sectional plates B1, D1, B2, D2 positioned in the other diagonal direction are applied to a second operator 285. The second operator 285 amplifies a sum signal b2+d2 of detection signals b2 and d2 of the inner sectional plates B2 and D2 with a predetermined gain k1 and adds a sum signal b1+d1 of detection signals b1 and d1 of the outer sectional plates B1 and D1 with the amplified signal k(b2+d2).

The output signal of the amplifier 289 and the output signal b1+d1+k(b2+d2) are applied to a phase comparator 251 to then be phase-compared. The phase comparator 251 outputs a tracking error signal TES.

Here, the gains k and k1 are constants, and the gain k2 is preferably a constant other than zero. Also, the sum k+k1 of the gains k and k1 is preferably a constant. If the gains k and k1 are both zero, the same result as shown in Figure 14 is caused.

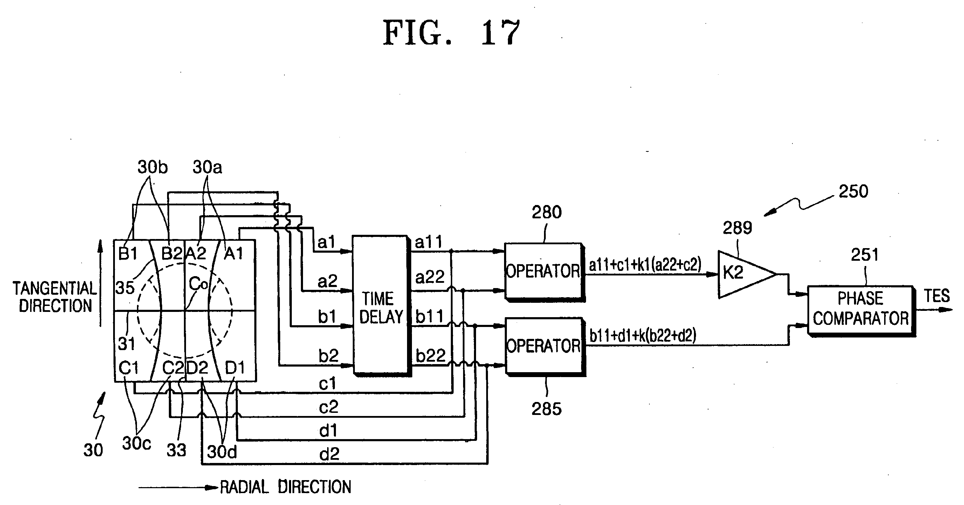

The circuit unit 250 shown in Figure 16 may further include a time delay 240 at the output ends of the sectional plates A1, A2, B1 and B2 positioned in one row, as shown in Figure 17.

In this case, the detection signals a1, a2, b1 and b2 of the sectional plates A1, A2, B1 and B2 pass through the time delay 240 to then be converted into time-delayed signals a11, a22, b11 and b22, respectively. The time-delayed signals a11 and a22 and the detection signals c1 and c2 of the sectional plates C1 and C2 positioned in the diagonal direction thereof, and the time-delayed signals b11 and b22 and the detection signals d1 and d2 of the sectional plates D1 and D2 positioned in the diagonal direction thereof, are applied to the first and second operators 280 and 285, respectively, like in Figure 16.

The output signal a11+c1+k1×(a22+c2) of the first operator 280 is amplified by the amplifier 289 with a predetermined gain k2.

The output signal b11+d1+k1×(b22+d2) of the second operator 285 and the output signal k2×[ a11+c1+k1×(a22+c2)] of the amplifier 289 are applied to the phase comparator 251 to then be phase-compared. The phase comparator 251 outputs a tracking error signal TES.

In the circuit unit 250 having the aforementioned configuration, like in Figure 15, signal distortion can be obscured by time delay and amplification even when there is a difference between pit depths of a recording medium. Thus, even in the case of a lens shift, a tracking error signal with greatly reduced offset can be generated.

In the case where the light spot deviates 0.1 *µ*m from the center of the pit or mark sequence recorded on the recording medium, the tracking error signals detected by the embodiments of the above-described tracking error signal detecting apparatus preferably have approximately 0.5 in the minimum value of Δt/Tw, where Tw represents a period of a channel clock of the recording/reproducing apparatus and Δt represents the detected average phase difference time, and preferably have approximately 0.2 in the maximum value of |(T1-T2) / (T1+T2)|, where T1 represents the maximum value of the tracking error signal, which is a positive value, and T2 represent the minimum value of the tracking error signal, which is a negative value.

Also, in the embodiments of the above-described tracking error signal detecting apparatus, phase comparators are provided for phase-comparing input signals through selectively blocking or amplifying the input signals according to the frequency band, digitization, phase-comparison of digitized signals and integration of the phase-compared signals, and outputting tracking error signals As described above, the tracking error signal detecting apparatus according to the present invention includes an 8-sectional photodetector the widths of which vary in a radial direction of the respective sectional plates so as to make full use of phase characteristics depending on light receiving regions, so that the detections signals of inner and outer sectional plates are operated in consideration of a difference in the phase characteristics. Therefore, a tracking error signal with a large gain and greatly reduced crosstalk between adjacent tracks can be detect. Also, phase deterioration due to signal distortion caused by a difference in pit depths can be greatly reduced by using time-delayed signals of the detection signals of some sectional plates. Thus, even when a lens shift occurs, a tracking error signal having little offset can be generated.

Therefore, the tracking error signal detecting apparatus according to the present invention can allow accurate tracking control in a high-density recording medium having relatively narrow tracks.

Although the present invention has been described and illustrated in detail through specific embodiments, it is clearly understood that various modifications and changes may be effected within the scope of the invention.

## Claims

1. A tracking error signal detecting apparatus having a photodetector (30) for receiving light reflected/diffracted from a recording medium, and a circuit unit (50) for performing operations on detection signals of the photodetector and producing a tracking error signal, wherein:
the photodetector includes four light receiving regions (30a-30d) arrayed counterclockwise, the dividing lines of which are substantially parallel to the radial and tangential directions of the recording medium;
**characterised in that**:
each of the four light receiving regions (30a-d) are further bisected to produce an inner sectional plate and an outer sectional plate, the radial widths of which vary along ± tangential directions from the center of the photodetector (30), so that 8 inner and outer sectional plates arrayed in a 2 × 4 matrix are formed, the directions of rows and columns of the sectional plates corresponding to the radial and tangential directions of the recording medium; and
the circuit unit (50) compares the phases of detection signals of inner and/or outer sectional plates positioned in the same row with each other and then produces a tracking error signal from a phase difference signal.

2. The tracking error detecting apparatus according to claim 1, wherein the circuit unit comprises:
a first phase comparator (51) for comparing phases of detection signals of a pair of outer sectional plates (A1, B1) positioned in one row and outputting a phase difference signal;
a second phase comparator (53) for comparing phases of detection signals of a pair of outer sectional plates (C1, D1) positioned in the other row and outputting a phase difference signal; and
an adder (59) for adding phase difference signals output from the first and second phase comparators (51, 53) and outputting a tracking error signal.

3. The tracking error detecting apparatus according to claim 1, wherein the circuit unit comprises:
a first phase comparator (151) for comparing phases of detection signals of a pair of inner sectional plates (A2, B2) positioned in one row and outputting a phase difference signal;
a second phase comparator (153) for comparing phases of detection signals of a pair of inner sectional plates (C2, D2) positioned in the other row and outputting a phase difference signal; and
an adder (159) for adding phase difference signals output from the first and second phase comparators and outputting the tracking error signal.

4. The tracking error detecting apparatus according to claim 1, wherein the circuit unit comprises:
first and second phase comparators (51, 151) for comparing phases of detection signals of a pair of outer (A1, B1) and inner (A2, B2)) sectional plates positioned in one row, respectively, and outputting phase difference signals;
third and fourth phase comparators (53, 153) for comparing phases of detection signals of a pair of outer (C1, D1) and inner (C2, D2) sectional plates positioned in the other row, respectively, and outputting phase difference signals;
a first adder (59) for adding the phase difference signals output from the first and third phase comparators (51, 53) to detect a first tracking error signal based on the detection signals of the outer sectional plates (A1, B1, C1, D1);
a second adder (159) for adding the phase difference signals output from the second and fourth phase comparators (151, 153) to detect a second tracking error signal based on the detection signals of the inner sectional plates (A2, B2, C2, D2); and
an operator (60) for summing the first and second tracking error signals detected by the first and second adders (59, 159) to output a tracking error signal.

5. The tracking error signal detecting apparatus according to claim 4, wherein the operator (60) amplifies at least one of the first and second tracking error signals output from the first and second adders (59, 159) with a predetermined gain to produce a tracking error signal.

6. The tracking error detecting apparatus according to claim 1, wherein the circuit unit (50) comprises:
a first operator (161) for amplifying a detection signal of one inner sectional plate (A2) positioned in one row with a predetermined gain and adding the amplified signal and a detection signal of the corresponding outer sectional plate (A1);
a second operator (162) for amplifying a detection signal of the other inner sectional plate (B2) positioned in said one row with a predetermined gain and adding the amplified signal and a detection signal of the corresponding outer sectional plate (B1);
a third operator (163) for amplifying a detection signal of one inner sectional plate (C2) positioned in the other row with a predetermined gain and adding the amplified signal and a detection signal of the corresponding outer sectional plate (C1);
a fourth operator (164) for amplifying a detection signal of the other inner sectional plate (D2) positioned in the other row with a predetermined gain and adding the amplified signal and a detection signal of the corresponding outer sectional plate (D1);
a first phase comparator (165) for comparing phases of sum signals output from the first and second operators (161, 163) and outputting a phase difference signal;
a second phase comparator (167) for comparing phases of sum signals output from the third and fourth operators (163, 164) and outputting a phase difference signal; and
an adder (169) for adding the phase difference signals output from the first and second phase comparators (165, 167) to output a tracking error signal.

7. The tracking error detecting apparatus according to any one of claims 1 through 6, wherein the inner sectional plates (A2, B2, C2, D2) are formed such that their widths are relatively narrower at the center of the photodetector (30) and relatively wider along ± tangential directions.

8. The tracking error detecting apparatus according to claim 7, wherein the lines dividing the inner light receiving regions from the outer sectional plates (A1, B1, C1, D1) are curved lines.

9. The tracking error detecting apparatus according to claim 8, wherein the maximum width of each of the inner sectional plates (A2, B2, C2, D2) is larger than the radius of received 0th-order diffracted light.

10. The tracking error detecting apparatus according to claim 7, wherein the width of each of the inner sectional plates (A2, B2, C2, D2) linearly increases from the center of the photodetector (30) outward in the ± tangential directions.

11. The tracking error detecting apparatus according to claim 10, wherein each of the inner sectional plates (A2, B2, C2, D2) has a shape selected from a trapezoid, a right-angle triangle and an isosceles triangle.

12. A tracking error signal detecting apparatus having a photodetector (30) for receiving light reflected/diffracted from a recording medium, and a circuit unit (250) for performing operations on detection signals of the photodetector (30) and producing a tracking error signal, wherein:
the photodetector (30) includes four light receiving regions (30a-30d) arrayed counterclockwise, the dividing lines of which are substantially parallel to the radial and tangential directions of the recording medium;
**characterised in that**:
each of the four light receiving regions are further bisected to produce an inner sectional plate and an outer sectional plate, the radial widths of which vary along ± tangential directions from the center of the photodetector (30), so that 8 inner and outer sectional plates arrayed in a 2 × 4 matrix are formed, the directions of rows and columns of the sectional plates corresponding to the radial and tangential directions of the recording medium, and that the circuit unit (250) amplifies at least some of the detection signals of the inner and/or outer sectional plates positioned in one diagonal direction with a predetermined gain, compares phase differences between the amplified signals and at least some of the detection signals of inner and/or outer sectional plates positioned in the other diagonal direction, and detects a tracking error signal from a phase difference signal.

13. The tracking error detecting apparatus according to claim 12, wherein the circuit unit comprises:
an amplifier (260) for amplifying a sum signal of detection signals of outer (A1, C1) or inner (A2, C2) sectional plates positioned in one diagonal direction with a predetermined gain to produce an amplified signal; and
a phase comparator (251) for comparing the phase of the amplified signal with that of a sum signal of detection signals of outer (B1, D1) or inner (B2, D2) sectional plates positioned in the other diagonal direction to detect a tracking error signal.

14. The tracking error detecting apparatus according to claim 12, wherein the circuit unit (250) comprises:
a first operator (280) for receiving detection signals of inner and outer sectional plates (A1, A2, C1, C2) positioned in one diagonal direction, amplifying a sum signal of detection signals of the inner sectional plates (A2, C2) with a first predetermined gain and adding the amplified signal and a sum signal of detection signals of the outer sectional plates (A1, C1);
a second operator (285) for receiving detection signals of inner and outer sectional plates (B1, B2, D1, D2) positioned in the other diagonal direction, amplifying a sum signal of detection signals of the inner sectional plates (B2, D2) with a second predetermined gain and adding the amplified signal and a sum signal of detection signals of the outer sectional plates (B1, D1);
an amplifier (289) for amplifying a signal output from one of the first and second operators (280, 285) with a third predetermined gain; and
a phase comparator (251) for comparing phases of a signal output from the other of the first and second operators (280, 285) and a signal output from the amplifier (289) to produce a tracking error signal.

15. The tracking error detecting apparatus according to claim 14, wherein the sum of the first and second predetermined gains is a constant value.

16. The tracking error detecting apparatus according to any one of claims 13 through 15, wherein the circuit unit further comprises a time delay (240) for time-delaying detection signals of the inner and/or outer sectional plates positioned in one row.

17. The tracking error detecting apparatus according to any one of claims 12 through 15, wherein the inner sectional plates (A2, B2, C2, D2) are formed such that their widths are relatively narrower at the center of the photodetector and relatively wider along ± tangential directions.

18. The tracking error detecting apparatus according to claim 17, wherein the lines dividing the inner light receiving regions from the outer sectional plates are curved lines.

19. The tracking error detecting apparatus according to claim 18, wherein the maximum width of each of the inner sectional plates is larger than the radius of received 0th-order diffracted light.

20. The tracking error detecting apparatus according to claim 17, wherein the width of each of the inner sectional plates (A2, B2, C2, D2) linearly increases from the center of the photodetector (30) outward in the ± tangential directions.

21. The tracking error detecting apparatus according to claim 20, wherein each of the inner sectional plates (A2, B2, C2, D2) has a shape selected from a trapezoid, a right-angle triangle and an isosceles triangle.

## Patentansprüche

1. Vorrichtung zum Erfassen eines Spurfolgefehlersignals mit einem Fotodetektor (30) zum Empfangen von Licht, das von einem Aufzeichnungsmedium reflektiert/abgelenkt wird, und Schaltungseinheit (50) zum Durchführen von Operationen an Erfassungssignalen des Fotodetektors und Erzeugen eines Spurfolgefehlersignals, wobei:
der Fotodetektor vier lichtaufnehmende Bereiche (30a - 30d) enthält, die entgegen dem Uhrzeigersinn angeordnet sind, wobei deren Trennlinien im Wesentlichen parallel zu der radialen und der tangentialen Richtung des Aufzeichnungsmediums verlaufen;
**dadurch gekennzeichnet, dass**:
jeder der vier lichtaufnehmenden Bereiche (30a - d) des Weiteren halbiert ist, um eine innere unterteilte Platte und eine äußere unterteilte Platte zu erzeugen, deren radiale Breiten entlang von ± tangentialen Richtungen von der Mitte des Fotodetektors (30) variieren, so dass 8 innere und äußere unterteilte Platten ausgebildet werden, die in einer 2 x 4-Matrix angeordnet sind, wobei die Richtungen von Reihen und Spalten der unterteilten Platten der radialen und der tangentialen Richtung des Aufzeichnungsmediums entsprechen; und
die Schaltungseinheit (50) die Phasen von Erfassungssignalen von inneren und/oder äußeren unterteilten Platten, die in der gleichen Reihe positioniert sind, miteinander vergleicht und dann ein Spurfolgefehlersignal aus einem Phasendifferenzsignal erzeugt.

2. Vorrichtung zum Erfassen eines Spurfolgefehlersignals nach Anspruch 1, wobei die Schaltungseinheit umfasst:
einen ersten Phasenvergleicher (51) zum Vergleichen von Phasen von Erfassungssignalen eines Paars von äußeren unterteilten Platten (A1, B1), die in einer Reihe positioniert sind, und zum Ausgeben eines Phasendifferenzsignals;
einen zweiten Phasenvergleicher (53) zum Vergleichen von Phasen von Erfassungssignalen eines Paars von äußeren unterteilten Platten (C1, D1), die in der anderen Reihe positioniert sind, und zum Ausgeben eines Phasendifferenzsignals; und
einen Addierer (59) zum Addieren von Phasendifferenzsignalen, die von dem ersten und dem zweiten Phasenvergleicher (51, 43) ausgegeben werden, und zum Ausgeben eines Spurfolgefehlersignals.

3. Vorrichtung zum Erfassen eines Spurfolgefehlersignals nach Anspruch 1, wobei die Schaltungseinheit umfasst:
einen ersten Phasenvergleicher (151) zum Vergleichen von Phasen von Erfassungssignalen eines Paars von inneren unterteilten Platten (A2, B2), die in einer Reihe positioniert sind, und zum Ausgeben eines Phasendifferenzsignals;
einen zweiten Phasenvergleicher (153) zum Vergleichen von Phasen von Erfassungssignalen eines Paars von inneren unterteilten Platten (C2, D2), die in der anderen Reihe positioniert sind, und zum Ausgeben eines Phasendifferenzsignals; und
einen Addierer (159) zum Addieren von Phasendifferenzsignalen, die von dem ersten und dem zweiten Phasenvergleicher ausgegeben werden, und zum Ausgeben eines Spurfolgefehlersignals.

4. Vorrichtung zum Erfassen eines Spurfolgefehlersignals nach Anspruch 1, wobei die Schaltungseinheit umfasst:
einen ersten und einen zweiten Phasenvergleicher (51, 151) zum Vergleichen von Phasen von Erfassungssignalen eines Paars von äußeren (A1, B1) und inneren (A2, B2) unterteilten Platten, die in einer Reihe positioniert sind, und zum Ausgeben von Phasendifferenzsignalen;
einen dritten und einen vierten Phasenvergleicher (53, 153) zum Vergleichen von Phasen von Erfassungssignalen eines Paars von äußeren (C1, C1) und inneren (C2, D2) unterteilten Platten, die in der anderen Reihe positioniert sind, und zum Ausgeben von Phasendifferenzsignalen;
einen ersten Addierer (59) zum Addieren von Phasendifferenzsignalen, die von dem ersten und dem dritten Phasenvergleicher (51, 53) ausgegeben werden, um ein erstes Spurfolgefehlersignal auf Basis der Erfassungssignale der äußeren unterteilten Platten (A1, B1, C1, D1) zu erfassen;
einen zweiten Addierer (159) zum Addieren von Phasendifferenzsignalen, die von dem zweiten und dem vierten Phasenvergleicher (151, 153) ausgegeben werden, um ein zweites Spurfolgefehlersignal auf Basis der Erfassungssignale der inneren unterteilten Platten (A2, B2, C2, D2) zu erfassen; und
einen Operator (60) zum Summieren des ersten und des zweiten Spurfolgefehlersignals, die von dem ersten und dem zweiten Addierer (59, 159) erfasst wurden, um ein Spurfolgefehlersignal auszugeben.

5. Vorrichtung zum Erfassen eines Spurfolgefehlersignals nach Anspruch 4, wobei der Operator (60) wenigstens eines des ersten und des zweiten Spurfolgefehlersignals, die von dem ersten und dem zweiten Addierer (59, 159) ausgegeben werden, mit einer vorgegebenen Verstärkung verstärkt, um ein Spurfolgefehlersignal zu erzeugen.

6. Vorrichtung zum Erfassen eines Spurfolgefehlersignals nach Anspruch 1, wobei die Schaltungseinheit (50) umfasst:
einen ersten Operator (161) zum Verstärken eines Erfassungssignals einer inneren unterteilten Platte (A2), die in einer Reihe positioniert ist, mit einer vorbestimmten Verstärkung und zum Addieren des verstärkten Signals und eines Erfassungssignals der entsprechenden äußeren unterteilten Platte (A1);
einen zweiten Operator (162) zum Verstärken eines Erfassungssignals der anderen inneren unterteilten Platte (B2), die in der einen Reihe positioniert ist, mit einer vorbestimmten Verstärkung und zum Addieren des verstärkten Signals und eines Erfassungssignals der entsprechenden äußeren unterteilten Platte (B1);
einen dritten Operator (163) zum Verstärken eines Erfassungssignals einer inneren unterteilten Platte (C2), die in der anderen Reihe positioniert ist, mit einer vorbestimmten Verstärkung und zum Addieren des verstärkten Signals und eines Erfassungssignals der entsprechenden äußeren unterteilten Platte (C1);
einen vierten Operator (164) zum Verstärken eines Erfassungssignals der anderen inneren unterteilten Platte (D2), die in der anderen Reihe positioniert ist, mit einer vorbestimmten Verstärkung und zum Addieren des verstärkten Signals und eines Erfassungssignals der entsprechenden äußeren unterteilten Platte (D1);
einen ersten Phasenvergleicher (165) zum Vergleichen von Phasen von Summensignalen, die von dem ersten und dem zweiten Operator (161, 162) ausgegeben werden, und zum Ausgeben eines Phasendifferenzsignals;
einen zweiten Phasenvergleicher (167) zum Vergleichen von Phasen von Summensignalen, die von dem dritten und dem vierten Operator (163, 164) ausgegeben werden, und zum Ausgeben eines Phasendifferenzsignals; und
einen Addierer (169) zum Addieren der Phasendifferenzsignale, die von dem ersten und dem zweiten Phasenvergleicher (165, 167) ausgegeben werden, um ein Spurfolgefehlersignal auszugeben.

7. Vorrichtung zum Erfassen eines Spurfolgefehlersignals nach einem beliebigen der Ansprüche 1 bis 6, wobei die inneren unterteilten Platten (A2, B2, C2, D2) so ausgebildet sind, dass ihre Breiten relativ schmaler an der Mitte des Fotodetektors (30) und relativ breiter entlang von ± tangentialen Richtungen sind.

8. Vorrichtung zum Erfassen eines Spurfolgefehlersignals nach Anspruch 7, wobei die Linien, die die inneren lichtaufnehmenden Bereiche von den äußeren unterteilten Platten (A1, B1, C1, D1) trennen, gekrümmte Linien sind.

9. Vorrichtung zum Erfassen eines Spurfolgefehlersignals nach Anspruch 8, wobei die maximale Breite jeder der inneren unterteilten Platten (A2, B2, C2, D2) größer als der Radius von empfangenem abgelenkten Licht von 0. Ordnung ist.

10. Vorrichtung zum Erfassen eines Spurfolgefehlersignals nach Anspruch 7, wobei die Breite jeder der inneren unterteilten Platten (A2, B2, C2, D2) von der Mitte des Fotodetektors (30) aus nach außen linear in den ± tangentialen Richtungen zunimmt.

11. Vorrichtung zum Erfassen eines Spurfolgefehlersignals nach Anspruch 10, wobei jede der inneren unterteilten Platten (A2, B2, C2, D2) eine Form aufweist, die aus einem Trapezoid, einem rechtwinkligen Dreieck und einem gleichschenkeligen Dreieck gewählt wird.

12. Vorrichtung zum Erfassen eines Spurfolgefehlersignals mit einem Fotodetektor (30) zum Empfangen von Licht, das von einem Aufzeichnungsmedium reflektiert/abgelenkt wird, und Schaltungseinheit (250) zum Durchführen von Operationen an Erfassungssignalen des Fotodetektors (30) und Erzeugen eines Spurfolgefehlersignals, wobei:
der Fotodetektor (30) vier lichtaufnehmende Bereiche (30a - 30d) enthält, die entgegen dem Uhrzeigersinn angeordnet sind, wobei deren Trennlinien im Wesentlichen parallel zu der radialen und der tangentialen Richtung des Aufzeichnungsmediums verlaufen;
**dadurch gekennzeichnet, dass**:
jeder der vier lichtaufnehmenden Bereiche des Weiteren halbiert ist, um eine innere unterteilte Platte und eine äußere unterteilte Platte zu erzeugen, deren radiale Breiten entlang von ± tangentialen Richtungen von der Mitte des Fotodetektors (30) variieren, so dass 8 innere und äußere unterteilte Platten ausgebildet werden, die in einer 2 x 4-Matrix angeordnet sind, wobei die Richtungen von Reihen und Spalten der unterteilten Platten der radialen und der tangentialen Richtung des Aufzeichnungsmediums entsprechen; und dass die Schaltungseinheit (250) wenigstens einige der Erfassungssignale der inneren und/oder äußeren unterteilten Platten, die in einer diagonalen Richtung positioniert sind, mit einer vorbestimmten Verstärkung verstärkt, die Phasendifferenzen zwischen den verstärkten Signalen und wenigstens einigen der Erfassungssignale von inneren und/oder äußeren unterteilten Platten vergleicht, die in der anderen diagonalen Richtung positioniert sind, und ein Spurfolgefehlersignal aus einem Phasendifferenzsignal erfasst.

13. Vorrichtung zum Erfassen eines Spurfolgefehlersignals nach Anspruch 12, wobei die Schaltungseinheit umfasst:
einen Verstärker (260) zum Verstärken eines Summensignals von Erfassungssignalen von äußeren (A1, C1) oder inneren (A2, C2) unterteilten Platten, die in einer diagonalen Richtung positioniert sind, mit einer vorbestimmten Verstärkung, um ein verstärktes Signal zu erzeugen; und
einen Phasenvergleicher (251) zum Vergleichen der Phase des verstärkten Signals mit derjenigen eines Summensignals von Erfassungssignalen von äußeren (B1, D1) oder inneren (B2, D2) unterteilten Platten, die in der anderen diagonalen Richtung positioniert sind, um ein Spurfolgefehlersignal zu erfassen.

14. Vorrichtung zum Erfassen eines Spurfolgefehlersignals nach Anspruch 12, wobei die Schaltungseinheit (250) umfasst:
einen ersten Operator (280) zum Empfangen von Erfassungssignalen von inneren und äußeren unterteilten Platten (A1, A2, C1, C2), die in einer diagonalen Richtung positioniert sind, zum Verstärken eines Summensignals von Erfassungssignalen der inneren unterteilten Platten (A2, C2) mit einer ersten vorbestimmten Verstärkung, und zum Addieren des verstärkten Signals und eines Summensignals von Erfassungssignalen der äußeren unterteilten Platten (A1, C1);
einen ersten Operator (285) zum Empfangen von Erfassungssignalen von inneren und äußeren unterteilten Platten (B1, B2, D1, D2), die in der anderen diagonalen Richtung positioniert sind, zum Verstärken eines Summensignals von Erfassungssignalen der inneren unterteilten Platten (B2, D2) mit einer zweiten vorbestimmten Verstärkung, und zum Addieren des verstärkten Signals und eines Summensignals von Erfassungssignalen der äußeren unterteilten Platten (B1, D1);
einen Verstärker (189) zum Verstärken eines Signalausgangs von einem des ersten und des zweiten Operators (280, 285) mit einer dritten vorbestimmten Verstärkung; und
einen Phasenvergleicher (251) zum Vergleichen von Phasen eines Signalausgangs von dem anderen des ersten und des zweiten Operators (280, 285) und eines Signalausgangs von dem Verstärker (189), um ein Spurfolgefehlersignal zu erzeugen.

15. Vorrichtung zum Erfassen eines Spurfolgefehlersignals nach Anspruch 14, wobei die Summe der ersten und der zweiten vorbestimmten Verstärkung ein konstanter Wert ist.

16. Vorrichtung zum Erfassen eines Spurfolgefehlersignals nach einem beliebigen der Ansprüche 13 bis 15, wobei die Schaltungseinheit des Weiteren eine Zeitverzögerung (240) zum zeitlichen Verzögern von Erfassungssignalen der inneren und/oder äußeren unterteilten Platten umfasst, die in einer Reihe positioniert sind.

17. Vorrichtung zum Erfassen eines Spurfolgefehlersignals nach einem beliebigen der Ansprüche 12 bis 15, wobei die inneren unterteilten Platten (a2, B2, C2, D2) so ausgebildet sind, dass ihre Breiten relativ schmaler an der Mitte des Fotodetektors und relativ breiter entlang von ± tangentialen Richtungen sind.

18. Vorrichtung zum Erfassen eines Spurfolgefehlersignals nach Anspruch 17, wobei die Linien, die die inneren lichtaufnehmenden Bereiche von den äußeren unterteilten Platten trennen, gekrümmte Linien sind.

19. Vorrichtung zum Erfassen eines Spurfolgefehlersignals nach Anspruch 18, wobei die maximale Breite jeder der inneren unterteilten Platten größer als der Radius von empfangenem abgelenkten Licht von 0. Ordnung ist.

20. Vorrichtung zum Erfassen eines Spurfolgefehlersignals nach Anspruch 17, wobei die Breite jeder der inneren unterteilten Platten (A2, B2, C2, D2) von der Mitte des Fotodetektors (30) aus nach außen linear in den ± tangentialen Richtungen zunimmt.

21. Vorrichtung zum Erfassen eines Spurfolgefehlersignals nach Anspruch 20, wobei jede der inneren unterteilten Platten (A2, B2, C2, D2) eine Form aufweist, die aus einem Trapezoid, einem rechtwinkligen Dreieck und einem gleichschenkeligen Dreieck gewählt wird.

## Revendications

1. Dispositif de détection de signal d'erreur de suivi comportant un photodétecteur (30) pour recevoir de la lumière réfléchie/diffractée d'un support d'enregistrement, et une unité de circuit (50) pour réaliser des opérations sur des signaux de détection du photodétecteur et pour produire un signal d'erreur de suivi, dans lequel :
le photodétecteur comprend quatre régions de réception de lumière (30a-30d) disposées dans le sens inverse des aiguilles d'une montre, et dont les lignes de séparation sont sensiblement parallèles aux directions radiales et tangentielles du support d'enregistrement ;
**caractérisé en ce que** :
chacune des quatre régions de réception de lumière (30a-30d) est en outre bissectée pour produire une sous-plaque intérieure et une sous-plaque extérieure, dont les largeurs radiales varient dans des directions ± tangentielles à partir du centre du photodétecteur (30), de sorte que 8 sous-plaques intérieures et extérieures disposées en une matrice 2 x 4 sont formées, les directions des rangées et des colonnes des sous-plaques correspondant aux directions radiales et tangentielles du support d'enregistrement ; et
l'unité de circuit (50) compare les phases des signaux de détection des sous-plaques intérieures et/ou extérieures disposées dans la même rangée et produit ensuite un signal d'erreur de suivi d'un signal de différence de phase.

2. Dispositif de détection d'erreur de suivi selon la revendication 1, dans lequel l'unité de circuit comprend :
un premier comparateur de phase (51) pour comparer des phases de signaux de détection d'une paire de sous-plaques extérieures (A1, B1) disposées dans une rangée et pour émettre un signal de différence de phase ;
un deuxième comparateur de phase (53) pour comparer des phases de signaux de détection d'une paire de sous-plaques extérieures (C1, D1) disposées dans l'autre rangée et pour émettre un signal de différence de phase ; et
un additionneur (59) pour additionner des signaux de différence de phase émis par les premier et deuxième comparateurs de phase (51, 53) et pour émettre un signal d'erreur de suivi.

3. Dispositif de détection d'une erreur de suivi selon la revendication 1, dans lequel l'unité de circuit comprend :
un premier comparateur de phase (151) pour comparer des phases de signaux de détection d'une paire de sous-plaques intérieures (A2, B2) disposées dans une rangée et pour émettre un signal de différence de phase ;
un deuxième comparateur de phase (153) pour comparer des phases de signaux de détection d'une paire de sous-plaques intérieures (C2, D2) disposées dans l'autre rangée et pour émettre un signal de différence de phase ; et
un additionneur (159) pour additionner des signaux de différence de phase émis par les premier et deuxième comparateurs de phase et pour émettre le signal d'erreur de suivi.

4. Dispositif de détection d'erreur de suivi selon la revendication 1, dans lequel l'unité de circuit comprend :
de premier et deuxième comparateurs (51, 151) pour comparer des phases de signaux de détection d'une paire de sous-plaques extérieures (A1, B1) et intérieures (A2, B2) disposées dans une rangée, respectivement, et pour émettre des signaux de différence de phase ;
de troisième et quatrième comparateurs de phase (53, 153) pour comparer des phases de signaux de détection d'une paire de sous-plaques extérieures (C1, D1) et intérieures (C2, D2) disposées dans l'autre rangée, respectivement, et pour émettre des signaux de différence de phase ;
un premier additionneur (59) pour additionner les signaux de différence de phase des premier et troisième comparateurs de phase (51, 53) pour détecter un premier signal d'erreur de suivi à partir des signaux de détection des sous-plaques extérieures (A1, B1, C1, D1) ;
un second additionneur (159) pour additionner les signaux de différence de phase des deuxième et quatrième comparateurs de phase (151, 153) pour détecter un second signal d'erreur de suivi à partir des signaux de détection des sous-plaques intérieures (A2, B2, C2, D2) ; et
un opérateur (60) pour additionner les premier et second signaux d'erreur de suivi détectés par les premier et second additionneurs (59, 159) pour émettre un signal d'erreur de suivi.

5. Dispositif de détection de signal d'erreur de suivi selon la revendication 4, dans lequel l'opérateur (60) amplifie au moins un des premier et second signaux d'erreur de suivi des premier et second additionneurs (59, 159) avec un gain prédéterminé pour produire un signal d'erreur de suivi.

6. Dispositif de détection d'erreur de suivi selon la revendication 1, dans lequel l'unité de circuit (50) comprend :
un premier opérateur (161) pour amplifier un signal de détection d'une sous-plaque intérieure (A2) disposée dans une rangée avec un gain prédéterminé et pour additionner le signal amplifié et un signal de détection de la sous-plaque extérieure correspondante (A1) ;
un deuxième opérateur (162) pour amplifier un signal de détection de l'autre sous-plaque intérieure (B2) disposée dans ladite rangée avec un gain prédéterminé et pour additionner le signal amplifié et un signal de détection de la sous-plaque extérieure correspondante (B1) ;
un troisième opérateur (163) pour amplifier un signal de détection d'une sous-plaque intérieure (C2) disposée dans l'autre rangée avec un gain prédéterminé et pour additionner le signal amplifié et un signal de détection de la sous-plaque extérieure correspondante (C1);
un quatrième opérateur (164) pour amplifier un signal de détection de l'autre sous-plaque intérieure (D2) disposée dans l'autre rangée avec un gain prédéterminé et pour additionner le signal amplifié et un signal de détection de la sous-plaque extérieure correspondante (D1) ;
un premier comparateur de phase (165) pour comparer des phases de signaux de somme émis par les premier et deuxième opérateurs (161, 163) et pour émettre un signal de différence de phase ;
un deuxième comparateur de phase (167) pour comparer des phases de signaux de somme des troisième et quatrième comparateurs de phase (163, 164) et pour émettre un signal de différence de phase ; et
un additionneur (169) pour additionner les signaux de différence de phase émis par les premier et deuxième comparateurs de phase (165, 167) pour émettre un signal d'erreur de suivi.

7. Dispositif de détection d'erreur de suivi selon l'une quelconque des revendications 1 à 6, dans lequel les sous-plaques intérieures (A2, B2, C2, D2) sont formées de sorte que leurs largeurs soient relativement plus étroites au centre du photodétecteur (30) et relativement plus importantes dans les directions ± tangentielles.

8. Dispositif de détection d'erreur de suivi selon la revendication 7, dans lequel les lignes séparant les régions de réception de lumière intérieures des sous-plaques extérieures (A1, B1, C1, D1) sont des lignes courbes.

9. Dispositif de détection d'erreur de suivi selon la revendication 8, dans lequel la largeur maximale de chacune des sous-plaques intérieures (A2, B2, C2, D2) est plus importante que le rayon de la lumière diffractée d'ordre 0 reçue.

10. Dispositif de détection d'erreur de suivi selon la revendication 7, dans lequel la largeur de chacune des sous-plaques intérieures (A2, B2, C2, D2) augmente linéairement du centre du photodétecteur (30) vers l'extérieur dans des directions ± tangentielles.

11. Dispositif de détection d'erreur de suivi selon la revendication 10, dans lequel chacune des sous-plaques intérieures (A2, B2, C2, D2) présente une forme choisie parmi un trapèze, un triangle rectangle, et un triangle isocèle.

12. Dispositif de détection d'erreur de suivi pourvu d'un photodétecteur (30) pour recevoir de la lumière réfléchie/diffractée d'un support d'enregistrement, et une unité de circuit (250) pour réaliser des opérations sur des signaux de détection du photodétecteur (30) et pour produire un signal d'erreur de suivi, dans lequel :
le photodétecteur (30) comprend quatre régions de réception de lumière (30a-30d) disposées dans le sens inverse des aguilles d'une montre, et dont les lignes de séparation sont sensiblement parallèles aux directions radiales et tangentielles du support d'enregistrement ;
**caractérisé en ce que** :
chacune des quatre régions de réception de lumière est en outre bissectée pour produire une sous-plaque intérieure et une sous-plaque extérieure, dont les largeurs radiales varient dans des directions ± tangentielles à partir du centre du photodétecteur (30), de sorte que 8 sous-plaques intérieures et extérieures disposées en une matrice 2 x 4 sont formées, les directions des rangées et des colonnes des sous-plaques correspondant aux directions radiales et tangentielles du support d'enregistrement, et **en ce que** l'unité de circuit (250) amplifie au moins une partie des signaux de détection des sous-plaques intérieures et/ou extérieures dans une direction diagonale avec un gain prédéterminé, compare des différences de phase entre les signaux amplifiés et au moins une partie des signaux de détection des sous-plaques intérieures et/ou extérieures disposées dans l'autre direction diagonale et détecte un signal d'erreur de suivi à partir d'un signal de différence de phase.

13. Dispositif de détection d'erreur de suivi selon la revendication 12, dans lequel l'unité de circuit comprend :
un amplificateur (260) pour amplifier un signal de somme des signaux de détection des sous-plaques extérieures (A1, C1) ou intérieures (A2, C2) disposées dans une direction diagonale avec un gain prédéterminé pour produire un signal amplifié ; et
un comparateur de phase (251) pour comparer la phase du signal amplifié avec celle d'un signal de somme de signaux de détection des sous-plaques extérieures (B1, D1) ou intérieures (B2, D2) disposées dans l'autre direction diagonale pour détecter un signal d'erreur de suivi.

14. Dispositif de détection d'erreur de suivi selon la revendication 12, dans lequel l'unité de circuit (250) comprend :
un premier opérateur (280) pour recevoir des signaux de détection de sous-plaques intérieures et extérieures (A1, A2, C1, C2) disposées dans une direction diagonale, pour amplifier un signal de somme de signaux de détection des sous-plaques intérieures (A2, C2) avec un premier gain prédéterminé et pour additionner le signal amplifié et un signal de somme de signaux de détection des sous-plaques extérieures (A1, C1) ;
un deuxième opérateur (285) pour recevoir des signaux de détection des sous-plaques extérieures et intérieures (B1, B2, D1, D2) disposées dans l'autre direction diagonale, pour amplifier un signal de somme de signaux de détection des sous-plaques intérieures (B2, D2) avec un deuxième gain prédéterminé et pour additionner le signal amplifié et un signal de somme de signaux de détection des sous-plaques extérieures (B1, D1) ;
un amplificateur (289) pour amplifier un signal émis par un des premier et deuxième opérateurs (280, 285) avec un troisième gain prédéterminé ; et
un comparateur de phase (251) pour comparer des phases d'un signal émis par l'autre des premier et deuxième opérateurs (280, 285) et un signal émis par l'amplificateur (289) pour produire un signal d'erreur de suivi.

15. Dispositif de détection d'erreur de suivi selon la revendication 14, dans lequel la somme des premier et deuxième gains est une valeur constante.

16. Dispositif de détection d'erreur de suivi selon l'une quelconque des revendications 13 à 15, dans lequel l'unité de circuit comprend en outre une temporisation (240) pour des signaux de détection avec temporisation des sous-plaques intérieures et/ou extérieures disposées dans une rangée.

17. Dispositif de détection d'erreur de suivi selon l'une quelconque des revendications 12 à 15, dans lequel les sous-plaques intérieures (A2, B2, C2, D2) sont formées de sorte que leurs largeurs soient relativement étroites au centre du photodétecteur et relativement plus importantes dans des directions ± tangentielles.

18. Dispositif de détection d'erreur de suivi selon la revendication 17, dans lequel les lignes séparant les régions de réception de lumière intérieures des sous-plaques extérieures sont des lignes courbes.

19. Dispositif de détection d'erreur de suivi selon la revendication 18, dans lequel la largeur maximale de chacune des sous-plaques intérieures est plus importante que le rayon de la lumière diffractée d'ordre 0 reçue.

20. Dispositif de détection d'erreur de suivi selon la revendication 17, dans lequel la largeur de chacune des sous-plaques intérieures (A2, B2, C2, D2) augmente linéairement à partir du centre du photodétecteur (30) vers l'extérieur dans les directions ± tangentielles.

21. Dispositif de détection d'erreur de suivi selon la revendication 20, dans lequel chacune des sous-plaques intérieures (A2, B, C2, D2) présente une forme choisie parmi un trapèze, un triangle rectangle et un triangle isocèle.
